# Europäisches Patentamt

## European Patent Office

## Office européen des brevets

(19)

(11) Veröffentlichungsnummer: **0 207 065**
A2

(12) **EUROPÄISCHE PATENTANMELDUNG**

(21) Anmeldenummer: **86890176.0**

(22) Anmeldetag: **12.06.86**

(51) Int. Cl.⁴: **B 29 C 47/12,** B 29 C 53/16
// B29L31:10

(30) Priorität: **13.06.85 AT 1771/85**

(43) Veröffentlichungstag der Anmeldung: **30.12.86**
**Patentblatt 86/52**

(84) Benannte Vertragsstaaten: **AT BE CH DE FR GB IT LI LU NL SE**

(71) Anmelder: **SCHAUMSTOFFWERK GREINER GESELLSCHAFT M.B.H., Greinerstrasse 70, A-4550 Kremsmünster Oberösterreich (AT)**

(72) Erfinder: **Pürstinger, Franz, Brunlehnerstrasse 11, A-4540 Bad Hall Oberösterreich (AT)**
Erfinder: **Topf, Siegfried, Waldmüllerweg 24, A-4050 Traun Oberösterreich (AT)**

(74) Vertreter: **Krause, Ernst, Dipl.-Ing. et al, Dipl.- Ing. Krause, Ernst Dipl. Ing. Casati, Wilhelm Patentanwälte Amerlingstrasse 8, A-1061 Wien (AT)**

(54) **Strangpressdüse.**

(57) Diese Erfindung bezieht sich auf eine Strangpressdüse, vorzugsweise Breitschlitzdüse, insbesondere von Wandelementen, bevorzugt aus Hartpolyvinyl-Chlorid, mit zwei Düsenlippen (8, 9), die miteinander verbunden sind und zwischen sich den Austrittsspalt für den auszupressenden Strang begrenzen. Zur Schaffung einer Düse, die hohen Betriebsdrucken sicher ohne Deformation standzuhalten vermag, ist vorgesehen, dass entweder,

a) die beiden Düsenlippen (8, 9), wie an sich bekannt, aus Platten bestehen und dass diese beiden Platten hakenartig ineinander mit Hilfe von formschlüssig ausgebildeten Anschlagflächen (14) verriegelbar sind, deren Erzeugende vorzugsweise parallel zur Auspressrichtung verlaufen, oder

b) dass die eine Düsenlippe (26) als Ring ausgebildet ist, der die andere Düsenlippe (27) als Kernteil aufnimmt, wobei umfänglich anschliessend an den Austrittsspalt (28) zwischen den Düsenlippen (26, 27) die formschlüssig ausgebildeten Anschlagflächen (30) vorgesehen sind, deren Erzeugende vorzugsweise parallel zur Auspressrichtung verlaufen.

Strangpreßdüse

Die Erfindung bezieht sich auf eine Strangpreßdüse, vorzugsweise Breitschlitzdüse, insbesondere von Wandelementen, bevorzugt aus Hartpolyvinylchlorid, mit zwei Düsenlippen, die miteinander verbunden sind und zwischen sich den Austrittsspalt für den auszupressenden Strang begrenzen.

Es ist bekannt, Strangpressen entweder mit starren Düsenmundstücken auszubilden oder aber Düsen vorzusehen, deren Größe bzw. Form des Düsenspaltes während des Strangpressens kontinuierlich veränderbar ist.

Die Erfindung bezieht sich auf die erstgenannte Art von Düsen; bei den bekannten Düsen dieser Art sind diese in Form von ebenen Stahlplatten ausgebildet, die durch Schraubenbolzen zusammengespannt sind. Durch die im Austrittsbereich des Düsenspaltes auftretenden hohen Drucke beim Strangpressen, z.B. von 300 bis 350 bar, kommt es zu einer Verbiegung bzw. Deformation der Düsenlippen, woraus sich unterschiedliche Austrittsspalte und in der Folge zufolge unterschiedlicher Wandstärken nicht maßhaltige Strangpreßprodukte ergeben.

Die Erfindung stellt sich die Aufgabe, eine Düse der eingangs genannten Art zu schaffen, die den hohen Betriebsdrucken ohne Deformation standzuhalten vermag und daher imstande ist, genau maßhaltige Strangpreßprodukte zu erzeugen.

Insbesondere bezieht sich die Erfindung auf eine Breitschlitzdüse für die Herstellung von bevorzugt aus Hartpolyvinylchlorid bestehenden Wandplatten der in der DE-AS 22 18 557 genannten Art, nämlich mit jeweils einer Aufhängekante, einer Begrenzungskante und einer zwischen diesen Kanten verlaufenden Verbindungsplatte aus einer durch Strangpressen geformten Materialbahn, und zwar in einer Vorrichtung mit einer Strangpresse, die einen beheizbaren Austrittsspalt aufweist, mit Kalibriereinrichtungen, die mit der Materialbahn zugekehrten

- 2 -

0207065

Formkanten versehen sind, und mit Kühleinrichtungen für die Materialbahn. Dabei bestand bisher das Mundstück des Strangpreßwerkzeuges auch aus zwei plattenartigen Mundstückteilen, die durch Bolzen miteinander verbunden sind und daher die vorgenannten Nachteile ebenfalls aufweisen.

Die vorstehend genannte Aufgabe wird gemäß der Erfindung dadurch gelöst, daß entweder

a) die beiden Düsenlippen, wie an sich bekannt, aus Platten bestehen und daß diese beiden Platten hakenartig ineinander mit Hilfe von formschlüssig ausgebildeten Anschlagflächen verriegelbar sind, deren Erzeugende vorzugsweise parallel zur Auspreßrichtung verlaufen, oder

b) daß die eine Düsenlippe als Ring ausgebildet ist, der die andere Düsenlippe als Kernteil aufnimmt, wobei umfänglich anschließend an den Austrittsspalt zwischen den Düsenlippen die formschlüssig ausgebildeten Anschlagflächen vorgesehen sind, deren Erzeugende vorzugsweise parallel zur Auspreßrichtung verlaufen. In dieser Weise erhalten die Düsenlippen durch den in sich ringartig geschlossenen Kraftfluß eine hohe Stabilität, sodaß im Betrieb ein einheitlicher und genau maßhaltiger Düsenaustrittsspalt beibehalten wird.

Ein weiteres Merkmal der Erfindung sieht vor, daß zwischen den durch die verriegelbaren Platten gebildeten Düsenlippen im Bereich des einen Endes des Austrittsspaltes ein Einlagestück vorgesehen ist. Dadurch ist nicht nur ein leichter Zusammenbau bzw. eine ebensolche Zerlegbarkeit ermöglicht, sondern auch die Herstellung von Strangpreßfolien mit Hinterschneidungen möglich. Das Zusammenhalten der Düsenlippen erfolgt vorteilhafterweise dadurch, daß die beiden Düsenlippen an den Anschlagflächen durch letztere durchsetzende Bolzen, vorzugsweise Schraubenbolzen, gesichert sind.

Gegenstand der Erfindung ist weiterhin eine Vorrichtung zur Herstellung eines Wandelementes der genannten Art, nämlich mit jeweils einer Aufhängekante, einer Begrenzungskante und einer zwischen diesen Kanten verlaufenden Verbindungsplatte aus einer durch Extrusion geformten Materialbahn, und zwar in einer Vorrichtung der genannten Art, also mit einer Strangpresse, die einen beheizbaren Austrittsspalt aufweist, mit Kalibriereinrichtungen, die mit der Materialbahn zugekehrten Formkanten versehen sind, und mit Kühleinrichtungen für die Materialbahn, die dadurch gekennzeichnet ist, daß der Austrittsspalt durch eine Düse nach der vorstehend genannten Art 1 b) gebildet ist. Damit können Wandelemente von besonders genauer Maßhaltigkeit hergestellt werden.

Dabei besteht ein weiteres Merkmal der Erifndung in einer besonderen Betriebsweise bei einer solchen Vorrichtung, wobei nämlich so verfahren wird, daß die in fast geschlossener Zylindermantelform aus der Düse austretende Materialbahn zu im wesentlichen ebener Form ausgebreitet wird, bevor sie in die Kalibriereinrichtung eingeführt wird.

Zwei Ausführungsformen von Düsen nach der Erfindung sowie die einer von ihnen zugehörige Vorrichtung werden als Beispiele anhand der Zeichnungen näher erläutert; es zeigen:

Fig. 1 eine Endansicht einer Breitschlitzdüse für ein Wandelement der angeführten Art nach der ersten Ausführungsform,

Fig. 2 den zugehörigen Mittellängsschnitt,

Fig. 3 eine Endansicht einer Düse mit teilzylindrischem Austrittsspalt nach der zweiten Ausführungsform, und

Fig. 4 den zugehörigen Mittellängsschnitt.

Fig. 5 ist eine schematische Darstellung eines Teiles einer Vorrichtung zur Herstellung von Wandelementen mit einer Düse nach den Fig. 3 und 4.

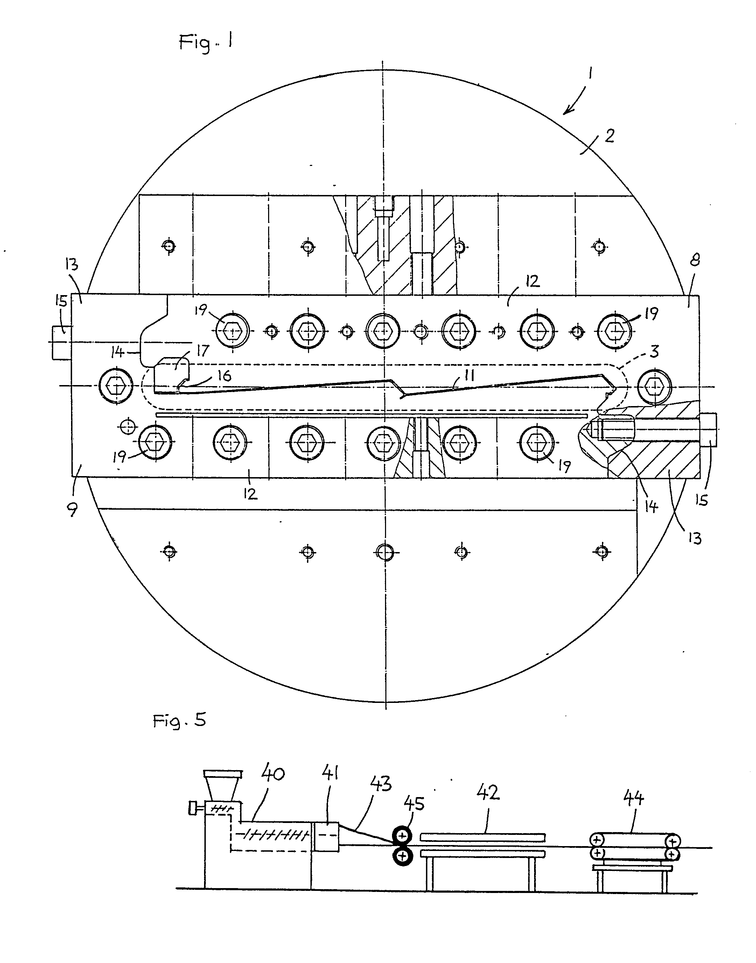

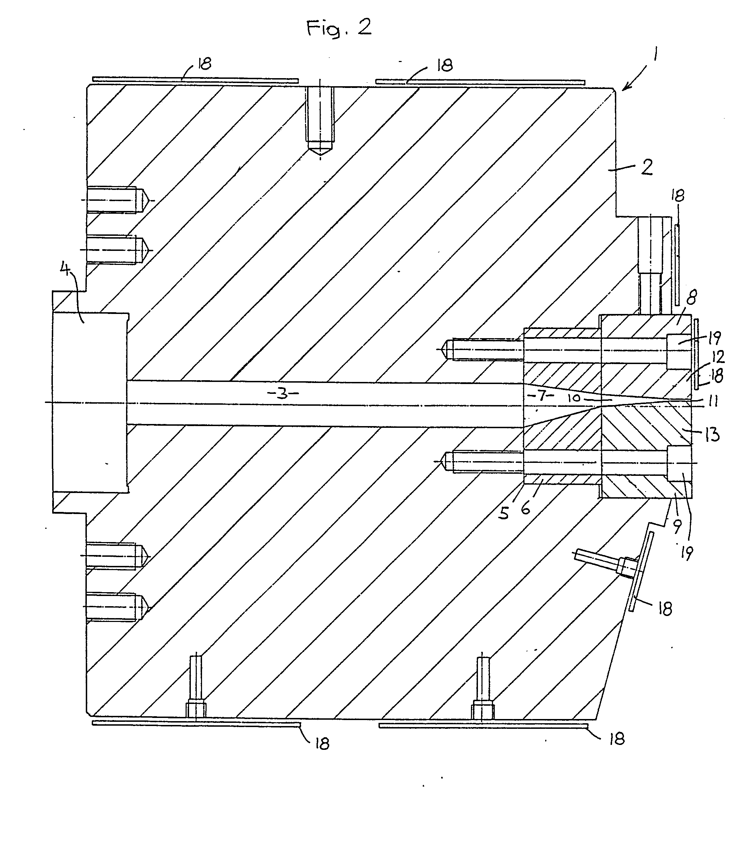

Wie aus den Fig. 1 und 2 ersichtlich, besteht die Breitschlitzdüse 1 aus einem Düsenkörper 2 von zylindrischer Gestalt, der axial von einem Zufuhrkanal 3 durchsetzt ist; das Profil des Kanales 3 ist in strichlierten Linien in Fig. 1 ersichtlich. Das in Fig. 1 linke Ende dieses Kanales 3 weist eine Verbreiterung 4 auf, die dem (nicht dargestellten) Extruder zugekehrt ist, von dem aus erhitztes und plastifiziertes Kunststoffmaterial, wie Hartpolyvinylchlorid, durch den Kanal 3 gefördert wird (Fig. 2).

Das Austrittsende des Kanales 3 weist eine andere Verbreiterung 5 auf, die stufenförmig abgetreppt ist und zunächst, in Förderrichtung des Kunststoffmateriales, d.h. in der Auspreßrichtung desselben, einen Verteiler 6 mit einem sich der Höhe nach verjüngenden Kanalabschnitt 7 und daran anschließend an die beiden Düsenlippen, eine obere Düsenlippe 8 und eine untere Düsenlippe 9 aufnimmt. Die/beiden Düsenlippen 8, 9 begrenzen einen letzten Kanalabschnitt 10, der sich ebenfalls der Höhe nach verjüngt, dergestalt, daß er am Austrittsende als Düsenspalt 11 genau die Querschnittsform des herzustellenden Wandelementes, wie in Fig. 1 dargestellt, aufweist.

Jede Düsenlippe 8, 9 besteht aus einem plattenartigen Teil 12, der an einem Ende einen hakenartigen Fortsatz 13 aufweist (Fig. 1). Die einander zugekehrten Flächen der Teile 12 begrenzen dabei den Austritts- oder Düsenspalt 11, und die einander zugekehrten Flächen an der Innenseite der Fortsätze 13 einerseits und am freien Ende der Teile 12 bilden formschlüssige Anschlagflächen 14, die ein hakenartiges Profil aufweisen, wobei ihre Erzeugenden parallel zur Achse des Düsenkörpers 2 und damit zur Auspreßrichtung verlaufen. Diese Anschlagflächen 14 werden von horizontalen Schraubenbolzen 15 durchsetzt, welche die Düsenlippen 8, 9 zusammenspannen.

Da bei diesem Ausführungsbeispiel das herzustellende Wandelement und damit der Düsenspalt eine Hinterschneidung 16 zur Bildung einer Aufhängekante des Wandelementes aufweist, ist zusätzlich in der durch die Teile 12 und 13 der unteren Düsenlippe 9 gebildeten Ecke ein Einlagestück 17 vorgesehen, das formschlüssig in den Teil 12 der oberen Düsenlippe 8 eingreift.

In üblicher Weise sind an den Außenflächen des Düsenkörpers 2 Heizbänder 18 angeordnet. Weitere horizontal angeordnete Schraubenbolzen 19 verankern die Düsenlippen 8, 9 sowie den Verteiler 6 im Düsenkörper 2.

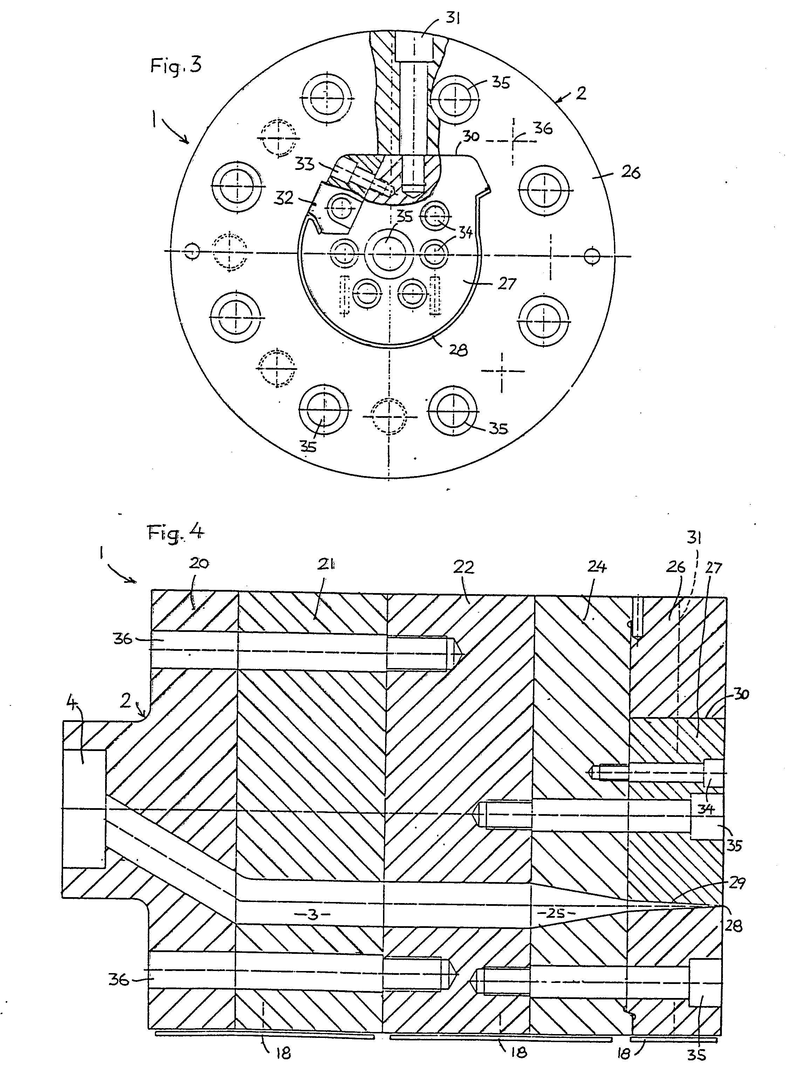

Das in den Fig. 3 und 4 dargestellte Ausführungsbeispiel einer Düse 1 weist einen Düsenkörper 2 auf, der ebenfalls mit einem, hier teilzylinderischen, Zufuhrkanal 3, ausgehend von der Verbreiterung 4, aufweist;dieser Kanal 3 ist jedoch, in einem ersten Teil 20 (Fig.4) des Düsenkörpers 2 kegelmantelartig nach unten geführt und verläuft in weiteren Teilen 21, 22 des Düsenkörpers 2 in Form eines hohlen Teilzylinders 23, und in einem folgenden Teil 24 ist ein sich der Höhe nach verjüngender Kanalabschnitt 25 vorgesehen. Die Teile 20,21, 22 und 24 des Düsenkörpers 2 sind dabei zylindrisch ausgebildet,wogegen der letzte Teil 26 des Düsenkörpers 2 als die eine Düsenlippe Ringform aufweist und in sich einen Kernteil 27 als die andere Düsenlippe aufnimmt.

Die Anordnung ist dabei so getroffen, daß zwischen der Innenfläche des Ringteiles 26 und der Außenfläche des Kernteiles 27 einerseits der im Düsenspalt 28 endende letzte Kanalabschnitt 29 liegt und anderseits, umfänglich anschließend an den Düsenspalt 28 (Fig. 3), die formschlüssig ausgebildeten Anschlagflächen 30 gebildet sind, deren Erzeugende auch hier parallel zur Austrittsrichtung verlaufen. Ein quer diese Anschlagflächen 30 durchsetzender Schraubenbolzen 31 spannt dabei die Teile 26, 27 zusammen (in Fig. 4 strichliert angedeutet). Da auch hier das Wandelement mit einer Hinterschneidung 16 versehen ist, wird ein Einlagestück 32 vorgesehen, das formschlüssig in den Kernteil 27 eingepaßt und daran mit Schraubenbolzen 33 festgelegt ist. Weitere, jedoch parallel zur Auspreßrichtung angeordnete und zum Teil in den Schnitt nach Fig. 4 gedrehte Schraubenbolzen 34 durchsetzen den Kernteil 27 (Fig. 4) und legen ihn am Teil 24 des Düsenkörpers 2 fest; ebensolche Schraubenbolzen 35 spannen die Teile 22, 24 und 26 zueinander. Ebenfalls zur Auspreßrichtung parallel verlaufende Aussparungen 36 in den Teilen 20, 21 und 22 dienen zur Aufnahme von (nicht dargestellten) weiteren Schraubenbolzen zur Verbindung dieser Teile.

Auch hier sind an den Außenflächen der Teile 20, 21, 22,24 und 26, wie in Fig. 4 ersichtlich, Heizbänder 18

0207065

angeordnet.

Eine Düse der in den Fig. 3 und 4 beschriebenen Art wird vorteilhafterweise in einer in Fig. 5 ersichtlichen Vorrichtung verwendet, mit der sich Wandelemente in neuartiger Weise herstellen lassen.

Diese Vorrichtung weist in üblicher Weise eine Strangpresse 40 auf, in der die pulverförmige Kunststoffmischung erhitzt und plastifiziert und anschließend der Düse 41, nach den Fig. 3 und 4 ausgebildet, zugeführt wird; ferner umfaßt sie eine Form- oder Kalibriereinrichtung 42, die zum Kühlen und Dimensionieren des Wandelementes dient und hiefür der Materialbahn 43 zugekehrte Formkanten sowie eine Kühleinrichtung für die Materialbahn aufweist. In üblicher Weise ist anschließend an die Kalibriereinrichtung 42 eine Transporteinrichtung 44 vorgesehen, mit der die Materialbahn 43 durch die Einrichtung 42 hindurchgezogen wird, worauf weit-ere Bearbeitungen (in nicht dargestellten Stationen) erfolgen.

Bei einer solchen Vorrichtung wird nun erfindungsgemäß die Materialbahn 43, die aus dem Düsenspalt 28 nach Fig. 3 austritt, sohin in der Form eines fast geschlossenen Kreiszylindermantels vorliegt, zu einer Form ausgebreitet, in der die Materialbahn 43 in ebener Form vorliegt, in der sie dann in die Kalibriereinrichtung 43 eingeführt wird.

Im Rahmen der Erfindung sind weitere Abänderungen an den beschriebenen Ausführungsbeispielen möglich. Als bevorzugtes Material für die Herstellung von Wandelementen hat sich Hartpolyvinylchlorid erwiesen. Es könnten in Fig. 5 allenfalls zusätzlich Prägewalzen 45 für die Materialbahn 43 angeordnet werden.

Patentansprüche:

1. Strangpreßdüse, vorzugsweise Breitschlitzdüse, insbesondere von Wandelementen, bevorzugt aus Hartpolyvinylchlorid, mit zwei Düsenlippen, die miteinander verbunden sind und zwischen sich den Austrittsspalt für den auszupressenden Strang begrenzen, dadurch gekennzeichnet, daß entweder

a) die beiden Düsenlippen (8,9), wie an sich bekannt, aus Platten bestehen und daß diese beiden Platten hakenartig ineinander mit Hilfe von formschlüssig ausgebildeten Anschlagflächen (14) verriegelbar sind, deren Erzeugende vorzugsweise parallel zur Auspreßrichtung verlaufen, oder

b) daß die eine Düsenlippe (26) als Ring ausgebildet ist, der die andere Düsenlippe (27) als Kernteil aufnimmt, wobei umfänglich anschließend an den Austrittsspalt (28) zwischen den Düsenlippen (26,27) die formschlüssig ausgebildeten Anschlagflächen (30) vorgesehen sind, deren Erzeugende vorzugsweise parallel zur Auspreßrichtung verlaufen.

2. Düse nach Anspruch 1, dadurch gekennzeichnet,daß zwischen den Düsenlippen (8,9; 26,27) im Bereich des einen Endes des Austrittsspaltes (11;30) ein Einlagestück (17;32) vorgesehen ist.

3. Düse nach Anspruch 1 oder 2, dadurch gekennzeichnet, daß die beiden Düsenlippen (8,9; 26,27) an den Anschlagflächen (14;30) durch letztere durchsetzende Bolzen, vorzugsweise Schraubenbolzen (15;31),gesichert sind.

4. Vorrichtung zur Herstellung eines Wandelementes, mit jeweils einer Aufhängekante, einer Begrenzungskante und einer zwischen diesen Kanten verlaufenden Verbindungsplatte aus einer durch Strangpressen geformten Materialbahn, mit einer Strangpresse (40), die einen beheizbaren Austrittsspalt aufweist, mit Kalibriereinrichtungen (42), die mit der Materialbahn zugekehrten Formkanten versehen sind, und mit Kühleinrichtungen für die Materialbahn,da-

- 8 -

0207065

durch gekennzeichnet, daß der Austrittsspalt (28) durch eine Düse nach Anspruch 1 b) gebildet ist.

5. Verfahren zur Herstellung eines Wandelementes mit der Vorrichtung nach Anspruch 4, dadurch gekennzeichnet, daß die in fast geschlossener Zylindermantelform aus der Düse (1) austretende Materialbahn (43) zu im wesentlichen ebener Form ausgebreitet wird, bevor sie in die Kalibrier-einrichtung (42) eingeführt wird.

Fig · 1

Fig · 5

Fig. 2

Fig. 3

Fig. 4